# EUROPEAN PATENT APPLICATION

(11) **EP 0 811 538 A2**
(43) Date of publication of application: **10.12.1997**
(21) Application number: 97109035.2
(22) Date of filing: 04.06.1997
(51) Int. Cl.: B60T 8/36

(54) **Brake fluid pressure control apparatus**

(30) Priority: 07.06.1996 JP 145627/96; 16.05.1997 JP 126855/97
(71) Applicant: SUMITOMO ELECTRIC INDUSTRIES, LTD., Osaka-shi, Osaka (JP)
(72) Inventor: Kono, Teruhisa, Itami Works Sumitomo Elec. Ltd., Itami-shi, Hyogo (JP); Osuga, Tsuyoshi, Hisai-shi, Mie (JP); Nakura, Mitsuhiko, Itami Works Sumitomo Elec. Ltd., Itami-shi, Hyogo (JP)
(74) Representative: Füchsle, Klaus, Dipl.-Ing.

(57) **Abstract**

A pin (12) to be inserted in a fluid pressure control unit (1) is provided at one side of an inter connector (10), while a socket part (16) to be fitted with an electronic control unit (3) is formed at the other side of the inter connector (10), thereby constituting a guide for coupling the fluid pressure control unit (1) and the electronic control unit (3).
Connector terminals (9,17,27,29) are surely connected when the electric connectors (4,5) of both units (1,3) are connected, and the units (1,3) are integrally coupled automatically when the connectors (4,5) are completely connected.

## Description

### BACKGROUND OF THE INVENTION

### 1. Field of the invention

The present invention relates to a coupling means fit for integrally coupling a fluid pressure control unit and an electronic control unit in an antilock control system or traction control system controlling a brake fluid pressure by way of electronic control.

### 2. Description of the prior art

In order to control a brake fluid pressure of a vehicle through electronic control, a fluid pressure control unit consisting of plural solenoid valves for increasing/holding/decreasing a fluid pressure and an oil pressure pump for feeding/collecting an operating liquid, and an electronic control unit for supplying electric instructions to the solenoid valves and oil pressure pump are required. Although both units have been generally separately installed in the vehicle, as the units are made more and more compact these days, the units are formed in one body thereby to reduce an installation space and simplify a fitting work.

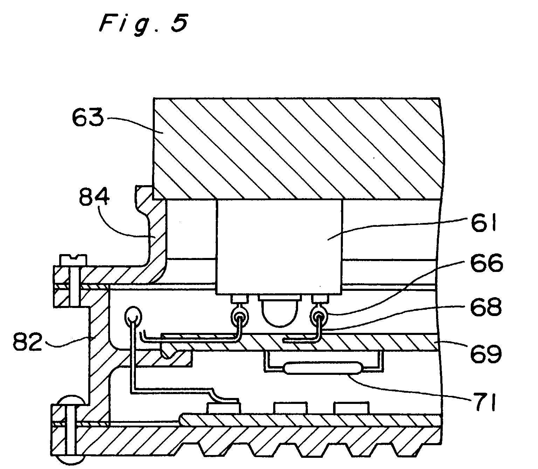

A prior art constitution is disclosed in Fig. 14 of unexamined Japanese Patent Toku-Hyo-HEI 3-501109, which will be described with reference to Fig. 5 herein. A spring contact member 66 is provided as an electric terminal of a coil part 61 of a solenoid valve of a valve storage body 63. On the other hand, a contact pin 68 as an electric terminal is set at a carrier member 69 loading an electronic member 71 or the like. Because of the constitution that the carrier member 69 is mounted to an adapter means 84 engaged with the storage body 63 and a frame-like body 82 bolted to the adapter means 84, production errors and assembling errors of parts of the apparatus disadvantageously cause various inconveniences when the spring contact member 66 is coupled with the contact pin 68.

### SUMMARY OF THE INVENTION

In the prior art, the above-described accumulated errors of the production errors and assembling errors of parts of the units tend to invite an imperfect connection of connector terminals or failures in electric connection when the fluid pressure control unit and the electronic control unit are assembled. The present invention has for its object to properly position a fluid pressure control unit and an electronic control unit mutually with using an inter connector as a guide. A further object of the present invention is to connect a male terminal for driving a motor of an oil pressure pump clamped to the fluid pressure control unit with a female terminal of a carrier member simultaneously when the fluid pressure control unit and the electronic control unit are mutually positioned, thereby to more save labor in the assembling work.

Moreover, the present invention aims to secure airtightness at an opening part in the periphery of a solenoid valve of the fluid pressure control unit when the fluid pressure control unit is bolted to the electronic control unit.

An inter connector formed of synthetic resin is arranged according to the present invention. A fluid pressure control unit is coupled at one side of the inter connector, while an electronic control unit loading an electronic member is coupled at the other side of the inter connector. A socket part is formed at either side of the inter connector, which is fitted in the outer periphery of one or a plurality of projecting parts at the other side, thereby constituting a guide working when the units are clamped by a clamping means. A coil excitation terminal of a solenoid valve of the fluid pressure control unit is electrically connected with a terminal of the electronic control unit in this manner.

A female terminal of a carrier member buried in the inter connector is automatically completely connected with a male terminal for driving a motor of an oil pressure pump during the above clamping work. A seal member is disposed at an outer peripheral edge of the inter connector so as to maintain airtightness of an opening part in the periphery of the solenoid valve of the fluid pressure control unit when the fluid pressure control unit is coupled with the electronic control unit. The opening part in the periphery of the solenoid valve is accordingly kept airtight simultaneously when the connector of the solenoid valve is connected with the connector for driving of the motor of the oil pressure pump during the clamping work.

### BRIEF DESCRIPTION OF THE DRAWINGS

The present invention will become more-fully understood from the detailed description given below and the accompanying drawings wherein:
Fig. 1 is a sectional view showing a connecting state of a solenoid valve connector and a connector for driving of a motor of an oil pressure pump with a inter connector used as a guide in an embodiment of the present invention;
Fig. 2 is an enlarged sectional view of the connecting state of the solenoid valve connector in the embodiment of the present invention;
Fig. 3 is an enlarged plane view showing the connecting state of the solenoid valve connector in the embodiment of the present invention;
Fig. 4 is a solid assembly view showing an assembling position of a fluid pressure control unit, the oil pressure pump and an electronic control unit in the embodiment of the present invention; and
Fig. 5 is a sectional view of a coupling state of connectors in a conventional example.

### DESCRIPTION OF PREFERRED EMBODIMENTS

A preferred example embodying the present invention will be described in detail with reference to the attached drawings.

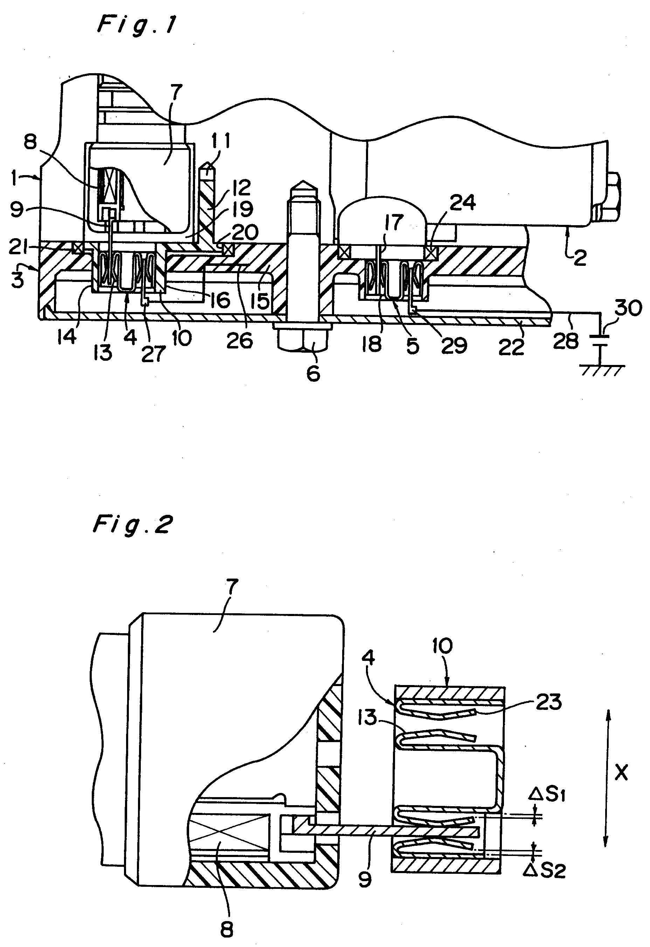

The present invention is constituted as shown in Figs. 1-4, whereby a coupling accuracy is improved between the connector of the solenoid valve and the connector for driving of the motor of the oil pressure pump when the fluid pressure control unit is integrally united with the electronic control unit, so that the connectors are not impeded in connection by accumulated errors as in the prior art, or an unnecessary internal stress is not left in the connectors after the connection which would cause breaks of terminals due to the vibration of a vehicle or the like failures in electric connection.

Owing to the improved coupling accuracy between the connector of the solenoid valve and the connector for driving of the motor of the oil pressure pump, both connectors are enabled to be completely connected simultaneously when the fluid pressure control unit is coupled with the electronic control unit. Moreover, the airtightness in the periphery of the solenoid valve of the fluid pressure control unit is secured in the bolting process.

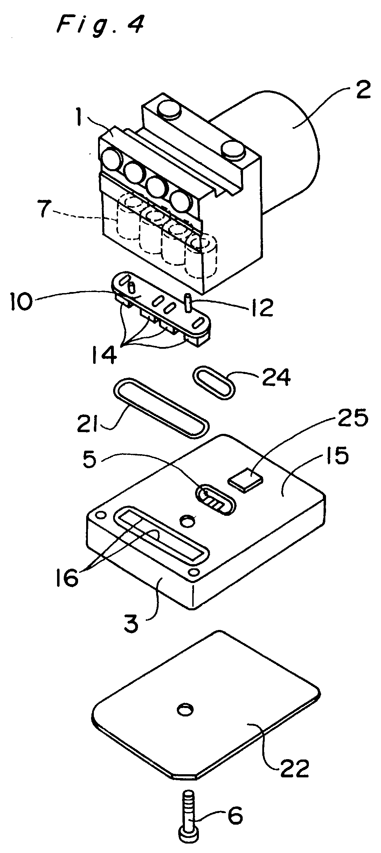

As indicated in Fig. 4, a brake fluid pressure control apparatus is fundamentally constituted of the fluid pressure control unit 1 having the oil pressure pump 2 and a plurality of solenoid valves 7 incorporated therein for increasing/maintaining/decreasing the fluid pressure, and the box-like electronic control unit 3 for controlling driving of the motor (not specifically shown) driving the oil pressure pump 2 of the fluid pressure control unit 1 and the plurality of solenoid valves 7. The fluid pressure control unit 1 has a connection port to a fluid pressure circuit at an upper part thereof.

The socket part 16 is formed at an upper surface of the carrier member 15 forming a main body of the electronic control unit 3, along a direction in which the solenoid valves 7 are arranged in the fluid pressure control unit 1. The downwardly projecting parts 14 of the inter connector 10 are fitted in the socket part 16, and a cover 22, the electronic control unit 3 and the fluid pressure control unit 1 are overlapped sequentially in this order. The units 3 and 1 are tightly secured by the bolt 6 inserted from below.

Fig. 1 is a sectional view showing an electric connection structure of an oil pressure pump 2 and each solenoid valve 7 of a fluid pressure control unit 1, and an electronic control unit 3. As shown in the drawing, in a state where the fluid pressure control unit 1 is fastened with the electronic control unit 3 by a bolt 6, a coil 8 of each solenoid valve 7 is electrically connected with the electronic control unit 3 via a solenoid valve connector 4 set at a projecting part 14 of an inter connector 10 fitted in a socket part 16 of a carrier member 15 and, a motor (not shown specifically) of the oil pressure pump 2 is electrically connected to the electronic control unit 3 via a connector 5 which is incorporated in an elliptic boss part of the carrier member 15 for driving of the motor.

The inter connector 10 is held between the units 1 and 3, with each projecting part 14 fitted in the socket part 16 of the carrier member 15 and an upwardly projecting engagement pin 12 fitted in an engagement hole 11 formed at a coupling face at the side of the fluid pressure control unit 1.

As is clear from an enlarged view of Fig. 2, each solenoid valve connector 4 has a female terminal 13 consisting of a pair of flexible tongue elements 23 faced to each other via a predetermined distance. A male terminal 9 extending from a bottom part of the solenoid valve 7 is inserted in the female terminal 13. Meanwhile, a male terminal 27 to be meshed with another female terminal 13 of the solenoid valve connector 4 from below is provided at the side of the electronic control unit 3, as indicated in Fig. 1. The male terminal 27 is connected by an electric wiring (printed circuit) 26 installed in the carrier member 15 with an electronic member 25 (referring to Fig. 4) constituting a control circuit for the electronic control unit 3. The electronic member 25 generates control signals to the oil pressure pump 2 and each solenoid valve 7 of the fluid pressure control unit 1 to control a fluid pressure, that is, increase/maintain/decrease the fluid pressure.

The connector 5 preliminarily built in the carrier member 15 has a pair of female terminals 18 similar to those of the solenoid valve connector 4. A male terminal 17 for driving the motor of the oil pressure pump 2 and a male terminal 29 of a power lead line 28 preliminarily set in the electronic control unit 3 are engaged with the female terminals 18 when the units 1 and 3 are coupled with each other. The power lead line 28 is connected to a battery power source 30 aboard the vehicle, feeding electricity to the motor of the oil pressure pump 2.

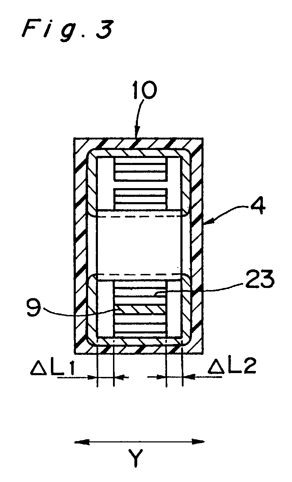

As shown in Figs. 2 and 3, the male terminal 9 extending from the solenoid valve 7 is formed like a thin elongated plate of a width smaller than a fitting width of the solenoid valve connector 4. The female terminal 13 engaged with the male terminal 9 as described earlier can be deformed by ΔS1 inward and ΔS2 outward in a lengthwise direction X. Moreover, the female terminal 13 has a left play of ΔL1 and a right play of ΔL2 in a breadthwise direction Y. Accordingly, the female terminals 13 absorb production errors and assembling errors of parts of the units 1 and 3 when the units 1 and 3 are assembled.

In Figs. 1 and 4, reference numerals 21 and 24 represent a seal member fitted in the periphery 20 of the inter connector 10 and a seal member of the oil pressure pump, respectively.

In the above embodiment, the socket part 16 is formed at the side of the electronic control unit 3 and the projecting parts 14 to be fitted in the socket part 16 are provided in the inter connector 10 at the side of the fluid pressure control unit 1. However, the socket part may be arranged at the side of the fluid pressure control unit 1 and the projecting parts can be formed at the side of the electronic control unit 3 to be meshed with the socket part 16.

According to the present invention, the solenoid valve connector of the fluid pressure control unit and the connector for driving of the motor of the oil pressure pump are completely electrically connected automatically when the fluid pressure control unit and the electronic control unit are clamped by the bolt, with the inter connector used as a guide. Therefore, the assembling work is carried out quickly with reduced labor. Moreover, since the connection accuracy for connecting the connectors is improved, such troubles as caused by electric connection failures, e.g., breaks of the terminals resulting from the vibration of the vehicle, etc. can be prevented. In addition, the airtightness in the periphery of the solenoid valves of the fluid pressure control unit is secured simultaneously when the units are united by the bolt.

Besides, even if either of the fluid pressure control unit and the electronic control unit breaks down, the failing unit can be replaced simply by loosening the bolt, in other words, serviceability in the market is high.

The invention being thus described, it will be obvious that the same may be varied in many ways. Such variations are not to be regarded as a departure from the spirit and scope of the invention, and all such modifications as would be obvious to one skilled in the art are intended to be included within the scope of the following claims.

## Claims

1. A brake fluid pressure control apparatus comprising a fluid pressure control unit and an electronic control unit in an antilock control system or traction control system for controlling a brake fluid pressure of a vehicle by way of electronic control, characterized in that an inter connector is interposed between said fluid pressure control unit and said electronic control unit, one side of said inter connector being held at a coupling face at the side of said fluid pressure control unit and the other side of said inter connector being held at the side of the electronic control unit, a socket part formed at either side of said inter connector is fitted in the outer periphery of one or a plurality of projecting parts of the inter connector, thereby constituting a guide working when each solenoid valve excitation terminal of said fluid pressure control unit is electrically connected with a terminal of said electronic control unit by a clamping means to couple said both units.

2. A brake fluid pressure control apparatus according to claim 1, wherein said electronic control unit is provided with a terminal to be coupled with a terminal of a motor for driving of a fluid pressure pump clamped to said fluid pressure control unit, with the socket part used as a reference, so that the terminals are electrically connected simultaneously when each solenoid valve excitation terminal is electrically connected with the terminal of the electronic control unit.

3. A brake fluid pressure control apparatus according to either of claims 1 and 2, wherein a seal member is arranged at an outer peripheral edge of said inter connector corresponding to an opening part in the periphery of each solenoid valve of said fluid pressure control unit, thereby to maintain airtightness of said fluid pressure control unit and said electronic control unit by clamping said both units by means of a coupling bolt.
